# EUROPEAN PATENT APPLICATION

(11) **EP 4 202 071 A1**
(43) Date of publication of application: **28.06.2023**
(21) Application number: 21858103.1
(22) Date of filing: 21.07.2021
(51) Int. Cl.: C22C 21/02, B23K 26/348, B23K 35/28, B23K 9/23

(54) **ALUMINUM ALLOY FILLER METAL, ALUMINUM ALLOY WELDED STRUCTURE, AND METHOD FOR WELDING ALUMINUM MATERIAL**

(30) Priority: 21.08.2020 JP 2020139833
(71) Applicant: Nippon Light Metal Co., Ltd., Minato-ku Tokyo 105-0004 (JP)
(72) Inventor: KANEKI, Hiroshi, Shizuoka-shi, Shizuoka 421-3203 (JP); XING, Jie, Shizuoka-shi, Shizuoka 421-3203 (JP); YOSHIDA, Ryo, Shizuoka-shi, Shizuoka 421-3203 (JP); OWADA, Yasuyuki, Shizuoka-shi, Shizuoka 421-3203 (JP)
(74) Representative: Mewburn Ellis LLP
(86) International application number: PCT/JP2021/027264
(87) International publication number: WO 2022/038954

(57) **Abstract**

Provided are: an aluminum alloy filler material which is less likely to cause welding cracks and from which a joint portion having excellent strength and toughness is formed, in high-speed joining of an aluminum alloy; an aluminum alloy welded structure manufactured using the aluminum alloy filler material; and a method for joining an aluminum material using the aluminum alloy filler material. The aluminum alloy filler material for high-speed joining according to the present invention is characterized by comprising aluminum including a surface-active element that lowers the surface tension of molten aluminum, wherein the surface-active element is at least one among Ca, Sr, and Ba, and the content of the surface-active element is 0.05-0.50 mass%.

## Description

### THECNICAL FIELD

The present invention relates to an aluminum alloy filler metal that can be used for fusion welding such as arc welding, an aluminum alloy welded structure manufactured by using the aluminum alloy filler metal, and a method for welding aluminum materials by using the aluminum alloy filler metal, and particularly relates to an aluminum alloy filler metal suitable for welding at a high welding speed.

### PRIOR ARTS

With respect to the filler metal used for welding aluminum materials, it is necessary to consider the degree of cracking generated during welding, mechanical properties, corrosion resistance, high temperature properties, and the like in combination with the base metal. Specific guidelines are shown in JIS Z 3604, and filler metals made of aluminum alloys such as 4000 series, 5000 series and 6000 series are used depending on the application.

For example, the filler metal made of a 4000 series aluminum alloy has two types of filler metals: 4043 with a standard composition of Al and 5% by mass of Si, and 4047 with a standard composition of Al and 12% by mass of Si, and the 4043 is used for welding aluminum alloys and castings that are easy to occur weld cracking because of a high resistance to hot cracking of the weld metal.

However, with respect to the filler metals of the 4000 series, since the strength and toughness of the welded portion tend to be low, it is necessary to improve joint strength by optimizing welding conditions such as welding current, welding voltage and welding speed, but there is a limit to just optimizing the welding conditions, and there is a problem that it is not practical for welded portions that require high strength and excellent toughness.

On the other hand, for example, in Patent Literature 1 (Japanese Patent Unexamined Publication No. 2006-218491), in order to provide a material for welding aluminum or aluminum alloys, which material can be applied to the MIG welding, and can obtain an aluminum alloy welded joint having a welded portion of high joint strength and high toughness, there is disclosed a material for welding aluminum alloys contains, in mass ratio, 10 to 400 ppm of Sr together with 4.5 to 13.0% of Si, remaining being Al and inevitable impurities.

In the welding material for aluminum alloy described in Patent Literature 1, it is said that, by adding a small amount of Sr to the Al-Si based welding material, it is possible to make fine the eutectic Si particles crystallized in the welded metal made of the Al-Si based alloy and to form a welded joint with high strength and high toughness.

### CITATION LIST

### Patent Literature

Patent Literature 1: Japanese Patent Unexamined Publication No. 2006-218491

### Summary of the Invention

### Technical Problem

However, in recent years, though improved productivity has been demanded and improvement of welding speed has been desired, since weld cracks in the welded portion are easy to occur when increasing the welding speed, even if the 4043 filler metal of the 4000 series is used, weld cracks cannot be sufficiently suppressed. In particular, this tendency is remarkable when the welding speed exceeds 1 m/min as in hybrid laser welding.

Here, the welding speed studied in Patent Literature 1 is 0.75 m/min, but in actual situation, there is no filler metal where, in addition to forming a joint portion having excellent mechanical properties, weld cracks do not occur even if the welding is performed at a high speed like hybrid laser welding.

In view of the problems in the prior art as described above, the object of the present invention is to provide an aluminum alloy filler metal which is less likely to cause welding cracks and from which a joint portion having excellent strength and toughness is formed, in high-speed joining of an aluminum alloy; an aluminum alloy welded structure manufactured using the aluminum alloy filler metal; and a method for joining an aluminum material using the aluminum alloy filler metal. More specifically, the object of the present invention is to provide an aluminum alloy filler metal in which weld cracks are unlikely to occur even when high-speed joining is performed at a welding speed exceeding 1 m/min, and an aluminum alloy welded structure manufactured using the aluminum alloy filler metal, and a method for joining an aluminum material using the aluminum alloy filler metal.

### Solution to Problem

In order to achieve the above object, the present inventors have extensively studied the composition of the aluminum alloy filler metal and the relationship between the composition and weld cracks, and then the inventors have found that it is extremely effective that a surface-active element that lowers the surface tension of molten aluminum is included in an appropriate amount, and have arrived at the present invention.

Namely, the present invention can provide an aluminum alloy filler metal for high-speed joining characterized by comprising an aluminum containing a surface-active element that lowers the surface tension of molten aluminum, wherein
the surface-active element is at least any one of Ca, Sr and Ba, and
the content of the surface-active element is 0.05 to 0.50% by mass.

By containing at least any one of Ca, Sr and Ba, the surface tension of the molten aluminum can be reduced, and the fluidity is improved due to the improved wettability of the molten filler metal, so that the weld cracks can be suppressed even when the high-speed joining is performed. Here, Ca, Sr and Ba belong to Group 2, Period 4-6 in the Periodic Table of the Elements.

In order to suppress the weld cracks during the high-speed joining, the amount of the surface-active element added is extremely important, and when 0.05 to 0.50 % by mass of the surface-active element is contained, it is possible to efficiently suppress the weld cracks even when a high-speed joining at a welding speed of exceeding 1 m/min. This effect becomes remarkable at a welding speed of 2 m/min, and becomes even more remarkable at 4 m/min.

In the aluminum alloy filler metal for high-speed joining of the present invention, it is preferable that the surface-active element is Sr. When Sr is added as the surface-active element, the surface tension of the molten aluminum can be reduced more efficiently than when Ca is added. Further, when Sr is added as the surface-active element, the eutectic Si phase is made granulated and fine more efficient than when Ba is added, and it is possible to improve the ductility and toughness of the weld portion.

Further, in the aluminum alloy filler metal for high-speed joining of the present invention, it is preferable to further contains 4 to 13% by mass of Si. When setting the Si content to 4% by mass or more, the melting point is sufficiently lowered, and in addition, the fluidity of the molten aluminum at the time of joining can be ensured. Further, when setting the Si content to 13% by mass or less, it is possible to suppress the decrease in the elongation of the joint portion due to the formation of crystallized substances that are starting points of fracture.

Further, the present invention also provides an aluminum alloy filler metal for hybrid laser welding, characterized by having the composition of the aluminum alloy filler metal for high-speed joining of the present invention.

The aluminum alloy filler metal for hybrid laser welding of the present invention is an aluminum alloy filler metal used in a joining process where laser welding and arc welding are combined. The hybrid laser welding is a welding technology that induces an arc to the cathode spot generated by a preceding laser, which can realize the improvement of welding stability, the suppression of defect formation, the increase of welding speed, and the increase of penetration depth.

Here, in the hybrid laser joining, there is a case that a joining speed of 5 m/min or more may be set, but even under such high-speed joining conditions, by using the aluminum alloy filler metal for hybrid laser joining of the present invention, it is possible to suppress the weld cracks extremely effectively.

Further, the present invention also provides an aluminum alloy welded structure, characterized in that the Sr content of the welded portion is 0.03% by mass or more.

The aluminum alloy welded structure of the present invention can be easily obtained by welding aluminum alloy materials by using the aluminum alloy filler metal for high-speed joining of the present invention. The aluminum alloy filler metal for high-speed joining of the present invention contains 0.05 to 0.50% by mass of Sr, and the Sr is present in the joint portion, but with respect to the final Sr content in the joint portion, it is necessary to consider the influence of dilution due to the aluminum alloy material to be joined. When the aluminum alloy material contains Sr, the Sr content of the joint portion may be greater than the Sr content of the aluminum alloy filler metal for high-speed joining.

Further, in the aluminum alloy welded structure of the present invention, it is preferable that, in the microstructure of the welded portion, equiaxed grains formed in the vicinity of the surface of the welded portion have an average grain size of 150 pm or less. It is possible to endow the welded portion with preferable mechanical properties (strength, ductility, reliability, and the like) by making the welded portion into a structure composed of fine equiaxed grains.

Here, in general, columnar crystals are formed in the solidification direction of the molten pool from the boundary between the welded portion and the base material (material to be joined), and an equiaxed microstructure is continuously formed from the columnar crystals. That is, the equiaxed grains are formed in the vicinity of the surface of the finally solidified welded portion.

Furthermore, the present invention also provides a method for welding aluminum materials, characterized by performing welding by using the aluminum alloy filler metal for high-speed joining of the present invention. In the method for welding aluminum materials of the present invention, it is preferable to use the hybrid laser welding.

Further, in the method for welding aluminum materials of the present invention, it is preferable to set the welding speed to 1 m/min or more. When the welding speed is increased, though it becomes difficult to suppress the weld cracks in the welded portion, when the hybrid laser welding is performed by using the aluminum alloy filler metal for high-speed joining of the present invention, it is possible to form the welded portion extremely efficiently.

### Effects of the invention

According to the present invention, it is possible to provide an aluminum alloy filler metal which is less likely to cause welding cracks and from which a joint portion having excellent strength and toughness is formed, in high-speed joining of an aluminum alloy; an aluminum alloy welded structure manufactured using the aluminum alloy filler metal; and a method for joining an aluminum material using the aluminum alloy filler metal. More specifically, it is possible to provide an aluminum alloy filler metal in which weld cracks are unlikely to occur even when high-speed joining is performed at a welding speed exceeding 1 m/min, and an aluminum alloy welded structure manufactured using the aluminum alloy filler metal, and a method for joining an aluminum material using the aluminum alloy filler metal.

### Brief Explanation of the Drawings

FIG. 1 is a schematic cross-sectional view of the vicinity of the welded portion in one embodiment of the aluminum alloy welded structure of the present invention.
FIG. 2 is a schematic diagram of the microstructure of the welded portion 4.
FIG. 3 is an appearance photograph of the jig for the Varestraint test.
FIG. 4 is a schematic diagram of the Varestraint test.
FIG. 5 is an appearance photograph of a weld bead obtained in the example.
FIG. 6 is a longitudinal cross-sectional photograph of the welded bead obtained with an aluminum alloy weld wire having the composition of Example 2.
FIG. 7 is an enlarged photograph of the apex of the welded portion in FIG. 6.
FIG. 8 is a microstructure of a welded bead obtained with an aluminum alloy weld wire having the composition of Example 3.
FIG. 9 is a longitudinal cross-sectional photograph of a welded bead obtained, without distortion, with an aluminum alloy weld wire having the composition of Example 2.
FIG. 10 is an enlarged photograph of the apex of the welded portion in FIG. 9.
FIG. 11 is an appearance photograph of a weld bead obtained in the comparative example.
FIG. 12 is a microstructure of a welded bead obtained with an aluminum alloy weld wire having the composition of Comparative Example 1.
FIG. 13 is a longitudinal cross-sectional photograph of the welded bead obtained with an aluminum alloy weld wire having the composition of Comparative Example 1.
FIG. 14 is an enlarged photograph of the apex of the welded portion in FIG. 13.

### Embodiments for achieving the invention

Hereinafter, representative embodiments of the aluminum alloy filler metal, the aluminum alloy welded structure, and the method for welding aluminum material of the present invention will be described in detail with reference to the drawings, but the present invention is not limited to only these examples. In the following description, the same or corresponding parts are denoted by the same reference numerals, and redundant description may be omitted. Also, since the drawings are for the purpose of conceptually explaining the present invention, the dimensions and ratios of the depicted components may differ from the actual ones.

### 1. Aluminum alloy filler metal

The aluminum alloy filler metal of the present invention is the an aluminum alloy filler metal for high-speed joining characterized by comprising an aluminum containing a surface-active element that lowers the surface tension of molten aluminum, wherein the surface-active element is at least any one of Ca, Sr and Ba, and the content of the surface-active element is 0.05 to 0.50% by mass. Further, the aluminum alloy filler metal can be suitably used as the aluminum alloy filler metal for hybrid laser welding. Each component will be described in detail below.

### (1) Essential additive element (surface-active element)

### Sr: 0.05 to 0.50% by mass

When containing 0.05 to 0.50% by mass of Sr, it is possible to efficiently suppress the weld cracks in the high-speed joining where the welding speed exceeds 1 m/min. From the viewpoint of suppressing the weld cracks more efficiently, the Sr content is preferably 0.15% by mass or more.

Further, in addition to being expensive, Sr may form a coarse compound when added in a large amount. In addition, when a large amount of Sr is added, air is likely to be entrained during the high-speed welding, and blowholes are likely to be formed. From these points of view, the Sr content is preferably 0.30% by mass or less, more preferably 0.20% by mass or less.

### Ca: 0.05 to 0.50% by mass

When containing Ca, the wettability is improved due to the decrease in the surface tension of the molten aluminum, and it is possible to suppress the weld cracks in the high-speed joining. Further, the addition of Ca refines the eutectic Si structure, which mainly contributes to the elongation. On the other hand, when containing excessively, crystallized substances become coarse to affect adversely the toughness.

### Ba: 0.05 to 0.50% by mass

When containing Ba, the wettability is improved due to the decrease in the surface tension of the molten aluminum, and it is possible to suppress the weld cracks in the high-speed joining. Further, although the effect is smaller than that of Ca, when contained excessively, crystallized substances become coarse to affect adversely the toughness.

Here, when two or more of Ca, Sr and Ba are added at the same time, the total content of the additive elements is 0.05 to 0.50% by mass, thereby preventing weld cracks during the high-speed welding, and at the same time, formation of coarse compounds and blowholes can be suppressed.

### (2) Arbitrary additive elements

Other than the surface-active elements Ca, Sr and Ba are not particularly limited as long as the effect of the present invention is not impaired, and the composition of various conventionally known aluminum filler metals can be employed. For example, it is possible to be the composition where the surface-active element described above may be added to the composition of the 4000 series filler metal, 5000 series filler metal, and 6000 series filler metal.

Here, considering the melting point and the fluidity of the molten metal, it is preferable to use the composition of the 4000 series filler metal. Further, it is preferable to contain an appropriate amount of Si.

### Si: 4 to 13% by mass

When setting the Si content to 4% by mass or more, the melting point is sufficiently lowered, and in addition, the fluidity of the molten aluminum at the time of joining can be ensured. Further, when setting the Si content to 13% by mass or less, it is possible to suppress the decrease in the elongation of the joint portion due to the formation of crystallized substances that are starting points of fracture.

The specific form of the aluminum alloy filler metal of the present invention is not particularly limited as long as the effect of the present invention is not impaired, and it can be in the form of conventionally known various filler metals. For example, it can be rod-like, continuous wire-like, powdery, granular, and the like.

### 2. Aluminum alloy welded structure

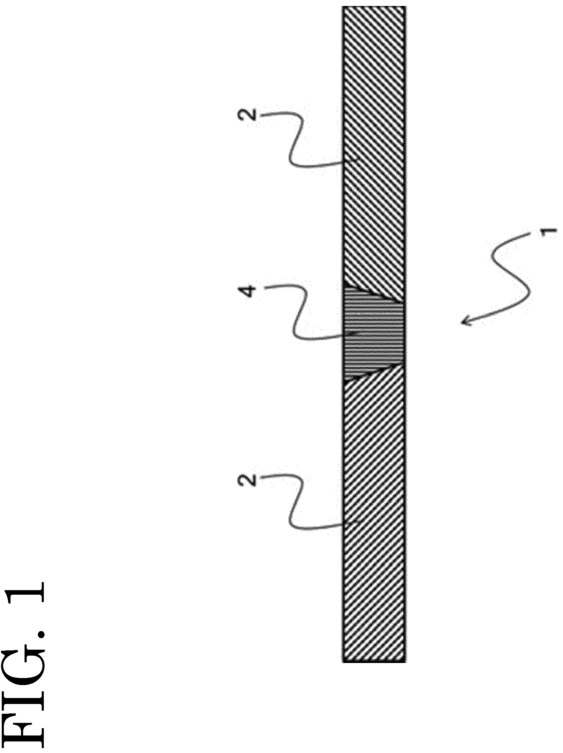

The aluminum alloy welded structure of the present invention is an aluminum alloy welded structure characterized in that the Sr content of the welded portion is 0.03% by mass or more. FIG. 1 shows a schematic cross-sectional view of the vicinity of the welded portion in one embodiment of the aluminum alloy welded structure of the present invention.

FIG. 1 shows a cross section perpendicular to the weld line, and an aluminum alloy structure 1 has a structure in which aluminum alloy materials 2 are joined together by a welded portion 4. The Sr content of the welded portion 4 is 0.03% by mass or more. The Sr content of the welded portion 4 is preferably 0.05% by mass or more, more preferably 0.10% by mass or more. A method for measuring the Sr content of the welded portion 4 is not particularly limited, and various conventionally known measuring methods can be used. For example, it is possible to calculate from the dilution ratio obtained from the welded cross-sectional area, or to use SEM-EDS measurement, EPMA measurement, emission spectroscopic analysis, or the like.

The composition of the welded portion 4 other than Sr is not particularly limited as long as the effect of the present invention is not impaired, and the composition of various conventionally known aluminum filler metals can be employed. For example, it is possible to be the composition where 0.03% by mass or more of Sr is added to the composition of the 4000 series filler metal, 5000 series filler metal, and 6000 series filler metal.

The shape and size of the welded portion 4 are not particularly limited as long as the effect of the present invention is not impaired, and may be appropriately adjusted according to the shape and size of the aluminum alloy material 2 and the desired joint characteristics. The welded portion 4 is preferably formed over the entire interface to be joined, but may be formed partially if the mechanical properties of the joint are not highly demanded.

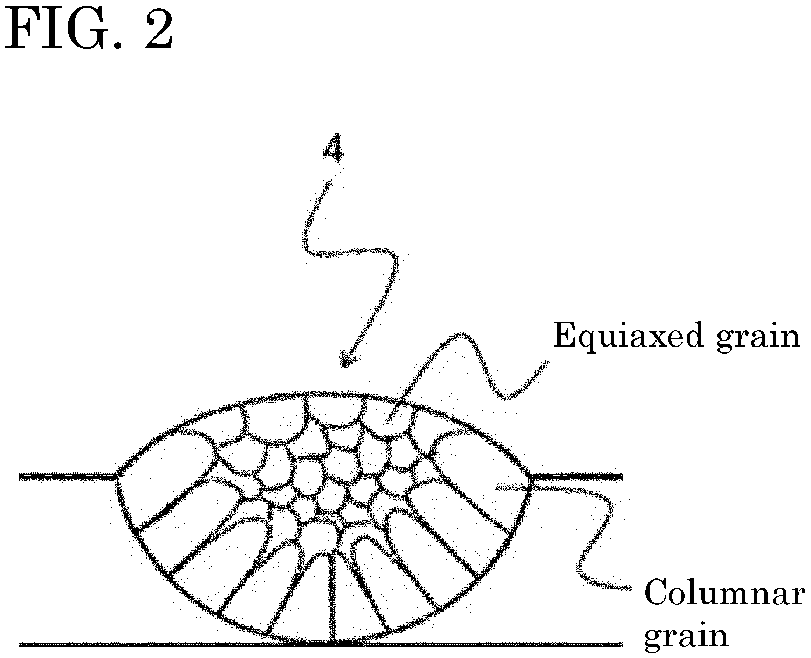

FIG. 2 schematically shows the microstructure of the welded portion 4 in FIG. 1. A structure composed of the columnar crystals is formed in the direction of solidification from the boundary with the unmelted aluminum alloy material 2, and a structure composed of the equiaxed crystal grains is formed as the solidification progresses. Here, it is preferable that the average grain size of the equiaxed grains formed in the vicinity of the surface of the welded portion 4 (on the final solidification side) is 150 pm or less. By forming the structure composed of the fine equiaxed grains in the welded portion 4, the welded portion 4 can be imparted with good mechanical properties (strength, ductility, reliability, and the like).

Although the method for determining the average grain size of the equiaxed grains formed in the vicinity of the surface of the welded portion 4 is not particularly limited, it can be determined, for example, by the intersection point method where a cross-sectional photograph including the welded portion 4 is used. Specifically, a straight line of arbitrary length is drawn on the cross-sectional photograph, the number of intersections between the crystal grains and the straight line is counted, and then the length of the straight line divided by the number of intersections can be taken as the average grain size. In this case, it is preferable to draw the straight line so that the number of intersections is 100 or more.

The composition, size and shape of the aluminum alloy material 2 are not particularly limited as long as the effect of the present invention is not impaired, and conventionally known aluminum alloy materials having various compositions, sizes and shapes can be used.

The aluminum alloy structure 1 may have a structure in which the aluminum alloy materials 2 are joined together by the welded portion 4, and may have a region made of a material other than the aluminum alloy. For example, the aluminum alloy material 2 and a steel material, a magnesium alloy material, a titanium alloy material, or the like may be joined.

### 3. Method for welding aluminum materials (Method for manufacturing welded aluminum alloy structure)

The method for welding aluminum materials of the present invention will be described by taking the case of manufacturing the aluminum alloy structure 1 as an example. The aluminum alloy structure 1 can be easily manufactured by welding the aluminum alloy materials 2 together by using the aluminum alloy filler metal for high-speed joining of the present invention. The welding method is not particularly limited as long as the effect of the present invention is not impaired, and conventionally known welding methods can be used.

The welding method for aluminum materials of the present invention is characterized by performing the hybrid laser welding by using the aluminum alloy filler metal for high-speed joining of the present invention. When using the aluminum alloy filler metal for high-speed joining of the present invention, it is possible to suppress the weld cracks even if the welding speed is increased.

It is preferable to use the hybrid laser welding as a welding. When using the hybrid laser welding, it is possible to realize the improvement of welding stability, the suppression of defect formation, the increase of welding speed, and the increase of penetration depth. Further, since the aluminum alloy filler metal for high-speed joining of the present invention is used, it is possible to suppress the weld cracks even if the joining speed is increased, and obtain the merits of the hybrid laser welding fully.

Further, in addition to the use of the aluminum alloy filler metal for high-speed joining of the present invention, by setting the welding speed to 11 m/min or more, it is possible to make the structure of the welded portion 4 finer. Further, by setting the welding speed to 5 m/min or more, it is possible to set the average grain size of the equiaxed grains formed in the vicinity of the surface of the welded portion 4 to 150 pm or less.

When the welding speed is set to 5 m/min or more, though it becomes difficult to suppress the weld cracks in the welded portion 4, when the hybrid laser welding is performed by using the aluminum alloy filler metal for high-speed joining of the present invention, it is possible to form the welded portion 4 extremely efficiently.

Although representative embodiments of the present invention have been described above, the present invention is not limited to these, and various design changes are possible, and all such design changes are included in the technical scope of the present invention.

### EXAMPLE

### <<Example>>

Based on the 4043 filler metal specified in JIS Z 3604, Sr was added to obtain an aluminum alloy weld wire (filler metal) having a composition (% by mass) shown in Table 1 and a diameter of 1.2 mm. Further, by using the aluminum alloy weld wire, bead-on welding was performed on the JIS-6063 aluminum alloy plate materials by the hybrid laser welding. For the hybrid laser welding, a hybrid laser welding machine manufactured by Flonias was used, and the plate thickness of the JIS-6063 aluminum alloy was 3 mm. The welding conditions shown in Table 2 were used for the hybrid laser welding.

**[Table 1]**

| | Si | Fe | Ti | Sr | Al |
|---|---|---|---|---|---|
| Ex. 1 | 5.3 | 0.17 | <0.01 | 0.06 | Bal. |
| Ex. 2 | 5.3 | 0.18 | <0.01 | 0.16 | Bal. |
| Ex. 3 | 5.4 | 0.17 | <0.01 | 0.32 | Bal. |
| Com. Ex. 1 | 5.3 | 0.17 | <0.01 | <0.001 | Bal. |
| Com. Ex. 2 | 5.3 | 0.17 | <0.01 | 0.03 | Bal. |

**[Table 2]**

| Arc | | | Laser | | |
|---|---|---|---|---|---|
| Setting current (A) | Arc length correction (%) | Current mode | Power (W) | Angular advance(deg) | Welding speed (m/min) |
| 160 | -5 | Pulse | 2500 | 10 | 5 |

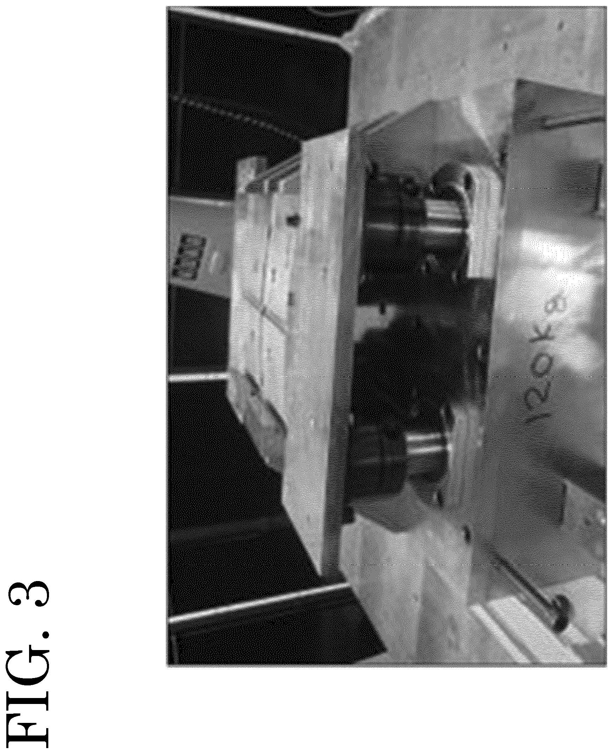

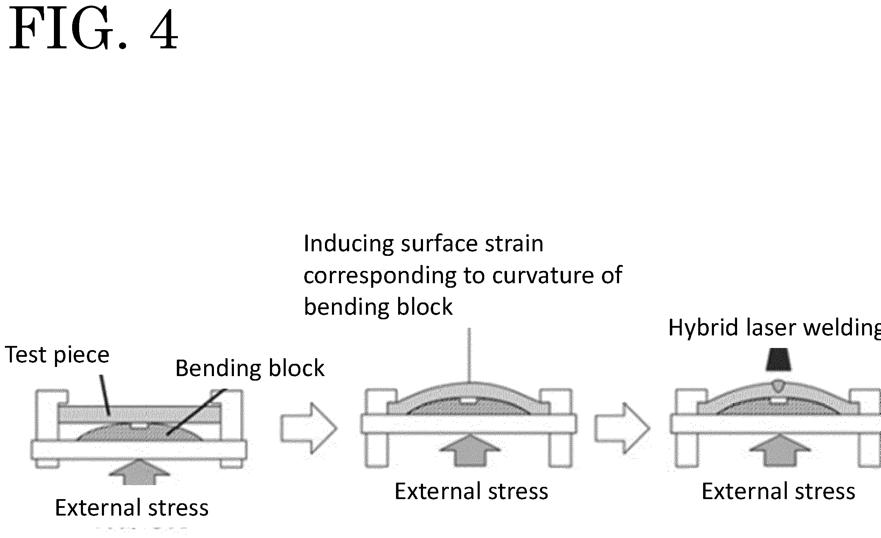

Here, in order to evaluate the characteristics of the aluminum alloy weld line against the weld cracks, welding was performed by the Varestraint test with the test jig shown in FIG. 3. A schematic diagram of the Varestraint test is shown in FIG. 4, and the welding is performed while external stress is applied to the materials to be joined, and thus the tensile stress applied to the welded portion promotes the weld cracks. The bending radius in the Varestraint test was 700 mm.

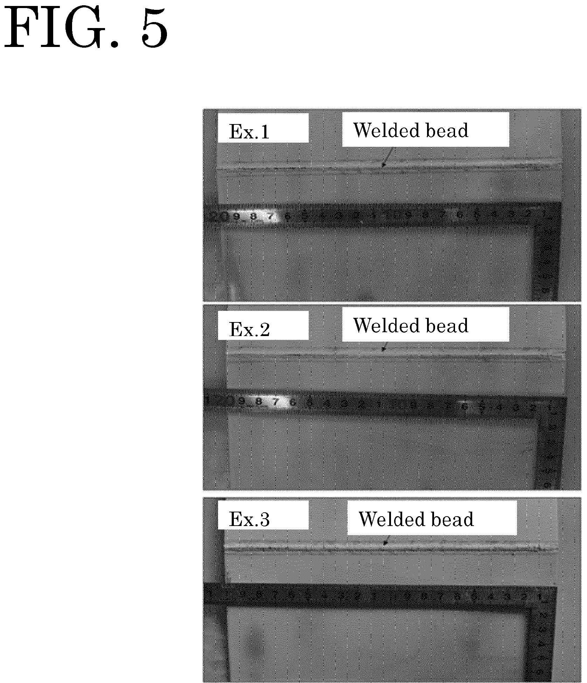

FIG. 5 shows an appearance photograph of the welded bead formed by hybrid laser welding. The weld cracks along the welding direction were generated on the surface of the welded bead by the Varestraint test, and the length of the weld cracks was measured by color check.

Table 3 shows the length of the weld cracks obtained by the measurement as a ratio of crack length (crack rate) per 100 mm of weld length. It can be seen that the crack rate decreases as the Sr content of the aluminum alloy weld wire increases. Table 3 also shows the obtained results of calculating the amount of Sr in the central portion of the welded bead based on the dilution rate determined from the cross-sectional area of the welded bead. It can be seen that when the aluminum alloy weld wires having the compositions of Examples 2 and Example 3 were used, the Sr content of the welded portion were 0.03% by mass or more.

**[Table 3]**

| | Crack rate (%) | Sr content (wt%) |
|---|---|---|
| Ex. 1 | 67.2 | 0.012 |
| Ex. 2 | 47.8 | 0.032 |
| Ex. 3 | 28.4 | 0.064 |
| Com. Ex. 1 | 84.2 | 0.000 |
| Com. Ex. 2 | 83.5 | 0.006 |

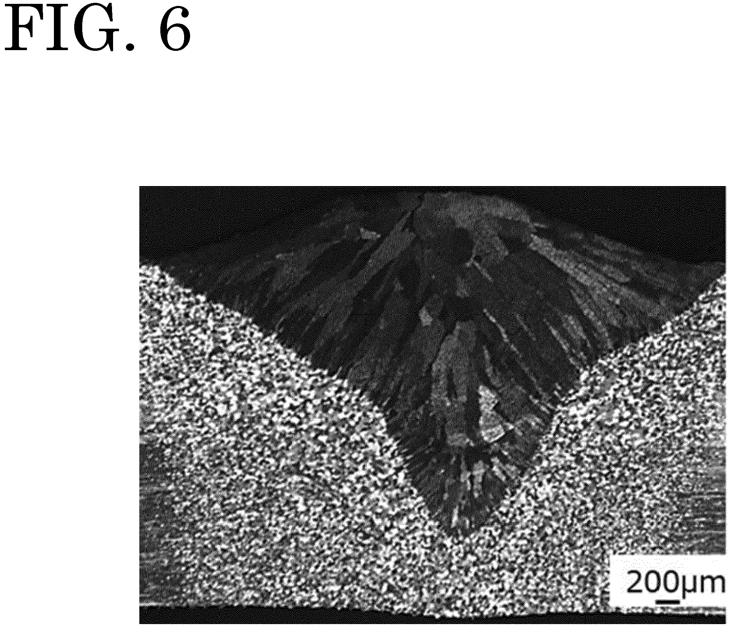

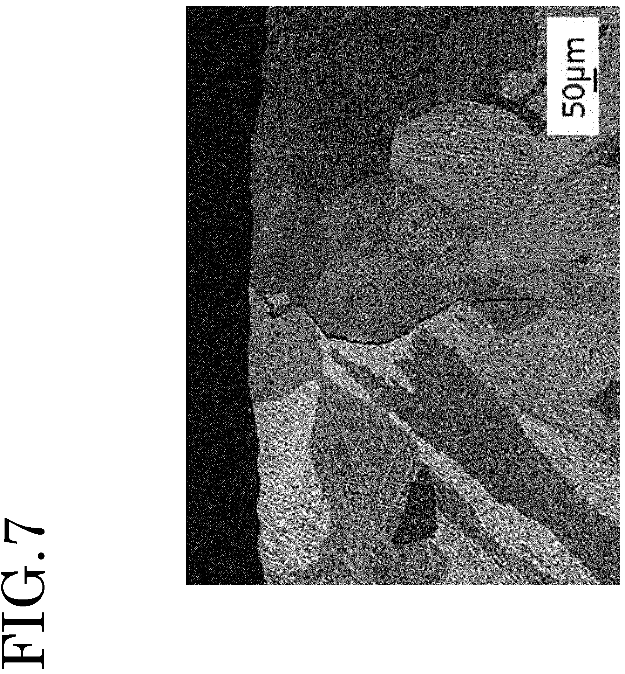

FIG. 6 shows a cross-sectional photograph of the welded bead obtained by using the aluminum alloy weld wire having the composition of Example 2. Further, FIG. 7 shows an enlarged photograph of the apex of the welded portion in FIG. 6. Although the slight crack occurs at the apex of the welded portion, it can be seen that the expansion and propagation of the crack are suppressed even in the Varestraint test.

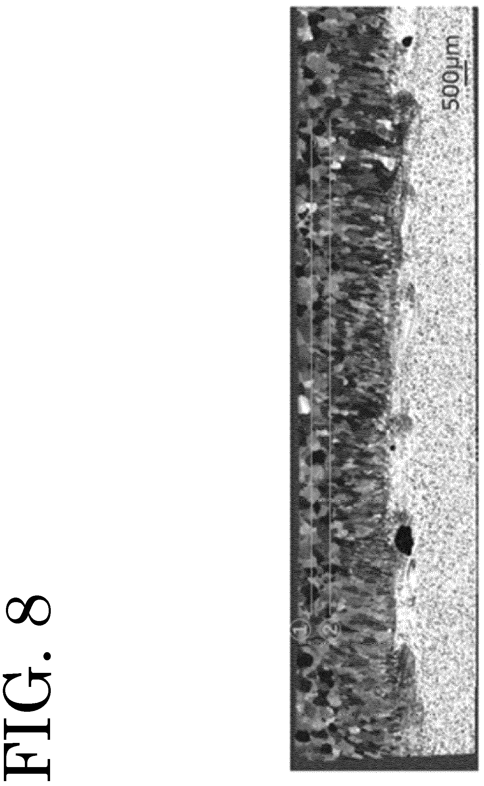

FIG. 8 shows a microstructure (optical microphotograph) of the welded bead obtained by using the aluminum alloy weld wire having the composition of Example 3. FIG. 8 shows the observation result of the longitudinal cross-section parallel to the longitudinal direction of the welded bead at the center of the welded bead width. It can be seen that the welded portion (welded bead) is formed on the surface of the unmelted aluminum alloy plate, the structure of the columnar crystals is formed in the vicinity of the boundary between the aluminum alloy plate and the welded portion, and the equiaxed grains are formed in the vicinity of the surface of the welded portion.

When the average grain size of the equiaxed grains in the vicinity of the joint surface was calculated by the intersection point method by using the structure photograph shown in FIG. 8, the average grain size was 139 pm. More specifically, two 10 mm lines were drawn (shown in FIG. 8), and the number of intersections with crystal grains was counted to calculate the "line length (20 mm)/number of intersections"

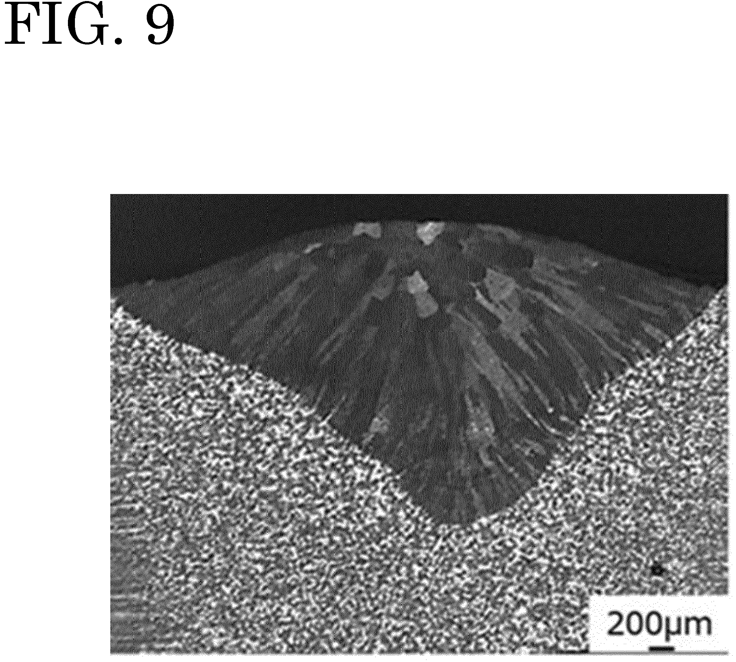

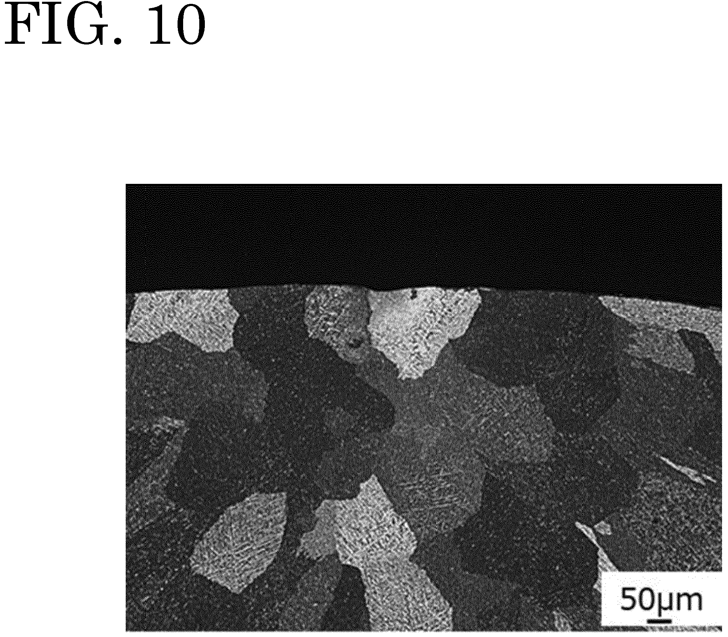

Further, as a result of that the welding was performed by using the aluminum weld wire having the composition of Example 2 in the state where no distortion was applied to the JIS-6063 aluminum alloy plate (welding conditions are the same as in Table 2), no weld crack was observed in the welded bead by the color check. FIG. 9 shows the cross-sectional photograph of the welded bead. Further, FIG. 10 shows the enlarged photograph of the apex of the welded portion in FIG. 9, no crack was observed.

### <<Comparative Example>>

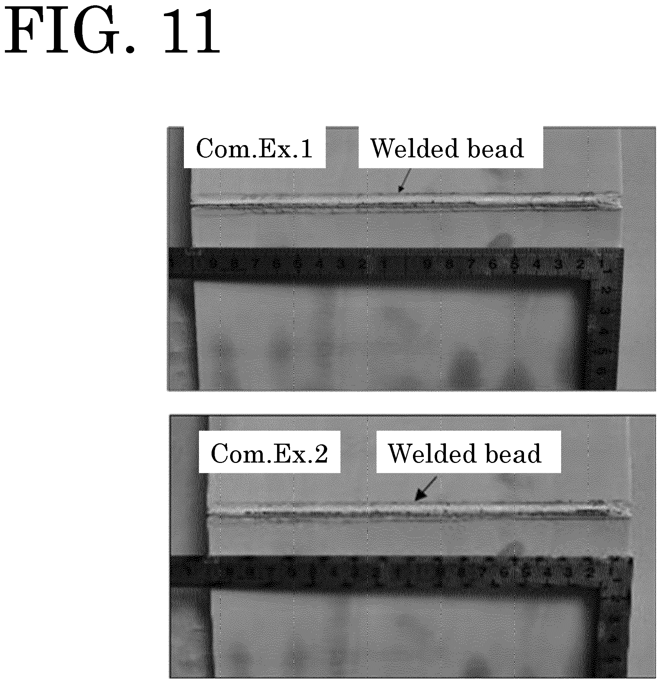

Welding by the Varestraint test was performed in the same manner as in Example except that the compositions of the aluminum alloy weld wire (filler metal) of Comparative Example 1 and Comparative Example 2 shown in Table 1 were employed. FIG. 11 shows the appearance photograph of the obtained welded bead.

The crack rate in the welded bead and the Sr content at the center portion of the welded bead are shown in Table 3. It can be seen that a large amount of the weld cracks occurred in the welded bead obtained in the Comparative Example as compared with the welded bead obtained in the Example. Further, when a small amount of Sr is added (Comparative Example 2), the crack rate is higher than when Sr is not added (Comparative Example 1). This result means that the suppression of the weld cracks by the addition of Sr greatly depends on the amount of Sr added.

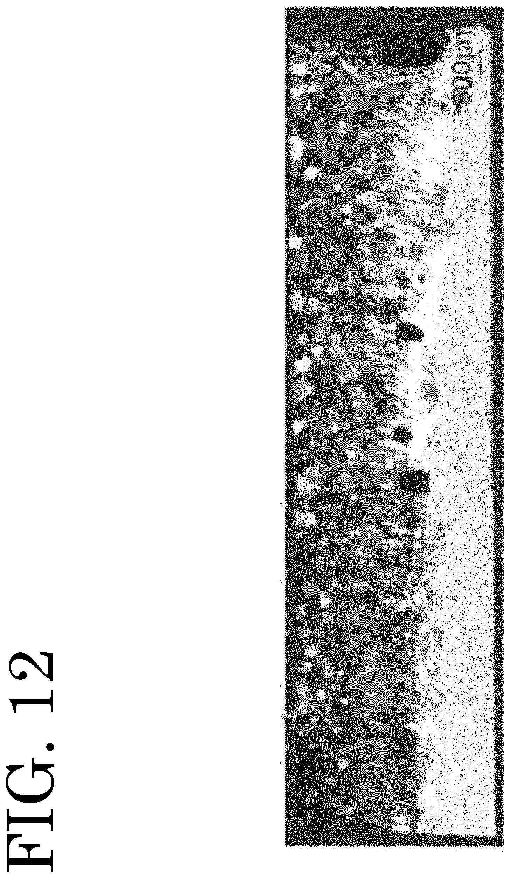

FIG. 12 shows the microstructure (optical microphotograph) of the welded bead obtained with the aluminum alloy weld wire having the composition of Comparative Example 1. FIG. 12 shows the observation result of the longitudinal cross-section parallel to the longitudinal direction of the welded bead at the center of the welded bead width. Similar to the welded bead obtained in the Example, although the structure composed of the columnar crystals and the structure composed of the equiaxed grains are observed, the proportion of the structure composed of columnar crystals is large.

When the average grain size of the equiaxed grains in the vicinity of the joint surface was calculated by using the photograph shown in FIG. 12 in the same manner as in Example, and the average grain size was 174 pm. The average grain size of the equiaxed grains in the welded portion obtained by using the aluminum alloy weld wire having the composition of Example 3 was 139 pm, and it can be seen that the equiaxed grains in the vicinity of the joint surface were refined by the addition of Sr.

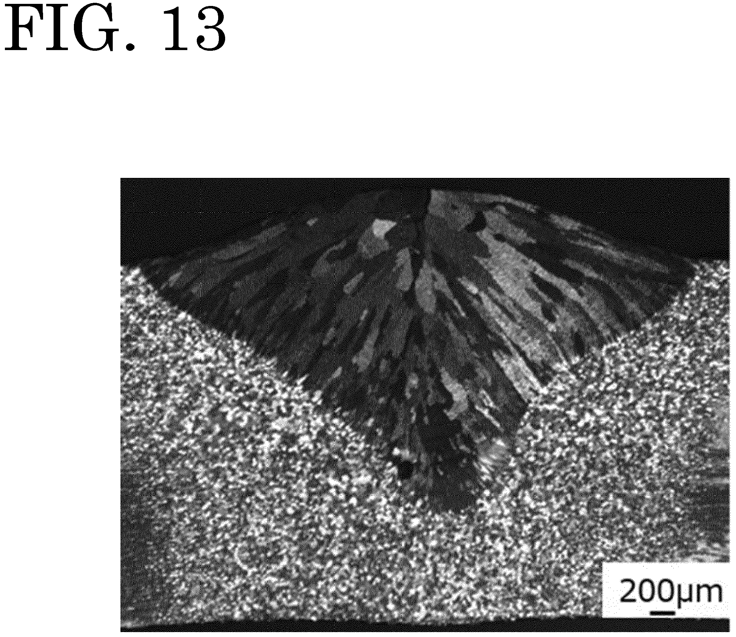

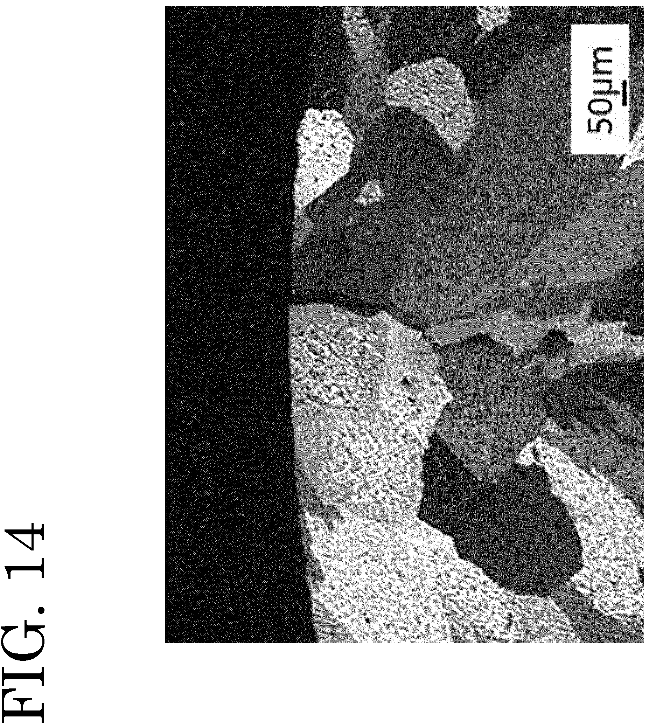

FIG. 13 shows the longitudinal cross-sectional photograph of the welded bead obtained with the aluminum alloy weld wire having the composition of Comparative Example 1. FIG. 14 is the enlarged photograph of the apex of the welded portion in FIG. 13, however, the deep crack is formed at the apex of the welded portion. Since in the photographs of FIG. 9 and FIG. 10 where the aluminum weld wire having the composition of Example 2 is used, no crack is observed at all, it can be seen that the weld cracks can be effectively suppressed in the high-speed joining by using the aluminum alloy filler metal of the present invention.

### Explanation of symbols

- 1: Aluminum alloy structure,
- 2: Aluminum alloy material,
- 4: Welded portion.

## Claims

1. An aluminum alloy filler metal for high-speed joining, **characterized by** comprising an aluminum containing a surface-active element that lowers the surface tension of molten aluminum, wherein
the surface-active element is at least any one of Ca, Sr and Ba, and
the content of the surface-active element is 0.05 to 0.50% by mass.

2. The aluminum alloy filler metal for high-speed joining according to claim 1, wherein the surface-active element is Sr.

3. The aluminum alloy filler metal for high-speed joining according to claim 1 or 2, further comprising 4 to 13% by mass of Si.

4. An aluminum alloy filler metal for hybrid laser welding, **characterized by** having the composition according to any one of claims 1 to 3.

5. An aluminum alloy welded structure, **characterized in that** the Sr content of the welded portion is 0.03% by mass or more.

6. The aluminum alloy welded structure according to claim 5, **characterized in that**,
in the microstructure of the welded portion, equiaxed grains formed in the welded portion have an average grain size of 150 µm or less.

7. A method for welding aluminum materials, **characterized in that**
welding is performed by using the aluminum alloy filler metal for high-speed joining according to any one of claims 1 to 3.

8. The method for welding aluminum materials according to claim 7, wherein
hybrid laser welding is used.

9. The welding method for aluminum materials according to claim 7 or 8, **characterized in that**
the welding speed is 1 m/min or more.
